# EUROPÄISCHE PATENTSCHRIFT

(11) **EP 2 339 708 B1**
(45) Veröffentlichungstag und Bekanntmachung des Hinweises auf die Patenterteilung: **14.12.2016**
(21) Anmeldenummer: 10196262.9
(22) Anmeldetag: 21.12.2010
(51) Int. Cl.: H02G 3/04, H02G 3/22

(54) **Brandgeschützte Kabeldurchführung**
Fire-proof cable guidance
Guide-câble protégé contre le feu

(30) Priorität: 22.12.2009 DE 102009060411
(43) Veröffentlichungstag der Anmeldung: 29.06.2011
(73) Patentinhaber: svt Brandschutz Vertriebsgesellschaft mbH International, 21217 Seevetal (DE)
(72) Erfinder: Haffner, Christian, 21077, Hamburg (DE); Reher, Reinald, 59379, Selm (DE)
(74) Vertreter: Stüven, Ralf

(56) Entgegenhaltungen:
- EP-A1- 0 236 539
- DE-A1- 2 140 474
- DE-U- 1 881 159
- DE-U1- 9 418 172
- DE-U1- 29 517 782
- DE-U1-202004 011 259

## Beschreibung

Die Erfindung betrifft eine brandgeschützte Kabeldurchführung.

Brandgeschützte Kabeldurchführungen zum Einbau in Decken und Wände sind grundsätzlich bekannt und dienen dazu, Kabelbrände und die Ausbreitung von Bränden und/oder Rauch über Kabelschächte zu verhindern.

Gattungsgemäße brandgeschützte Kabeldurchführungen sind beispielsweise in der DE 196 53 963 A1, DE 20 2004 011 259 U1 und der DE 10 2008 003 120 A1 beschrieben. Es handelt sich dabei um beidseitig offene Gehäuse mit einem einen Kabelkanal bildenden Innenraum, der bei großer Wärme bzw. im Brandfall expandierende Brandschutzpackete oder -streifen aufweist. Die Gehäuse werden in Decken- bzw. Wanddurchbrüchen von z.B. Gebäuden eingebaut, um Kabel und/oder Leerrohre durch Decken oder Wände hindurchführen zu können.

Die DE 94 18 172 U1 beschreibt eine Rohrmanschette zum Abschotten von durch Wände oder Decken hindurchführenden Rohren mit einem unter Hitzeeinwirkung nach innen ausdehnbaren, feuerfesten Blähmaterial auf der Innenseite der Manschette, wobei die Manschette aus gegebenenfalls miteinander verrastbar oder verklinkbar aneinander zu befestigenden Segmenten zusammengebaut werden kann.

Darüber hinaus sind auch brandgeschützte Kabeldurchführungen auf Basis von Schaumstoffen mit intumeszenten Eigenschaften im Stand der Technik bekannt, s. z.B. EP 0 400 402 A1 und DE 10 2004 056 913 A1.

Die bekannten brandgeschützten Kabeldurchführungen sind jedoch vergleichsweise aufwendig in der Konstruktion und/oder der Anwendung und/oder teuer. Darüber hinaus eignen sie sich häufig nicht zur Nachrüstung, d.h. sie sind nicht oder nur mit relativ großem Aufwand nachträglich installierbar.

Aufgabe der vorliegenden Erfindung ist es daher, eine einfache, leicht zu handhabende und vergleichsweise kostengünstige brandgeschützte Kabeldurchführung bereit zu stellen, die auch zur Nachrüstung geeignet ist.

Erfindungsgemäß wird die Aufgabe gelöst durch eine brandgeschützte Kabeldurchführung mit den kennzeichnenden Merkmalen des Anspruchs 1.

Die erfindungsgemäße brandgeschützte Kabeldurchführung umfasst Halbschalen, die mit den offenen Seiten einander zugewandt sind. Mindestens eine der Halbschalen ist auf ihrer Innenseite zumindest teilweise mit einem Dämmschichtbildner beschichtet. Die Halbschalen sind durch Steck- und/oder Klemmverbinder unter Ausbildung eines Hohlkörpers miteinander verbunden.

Die brandgeschützte Kabeldurchführung gemäß der vorliegenden Erfindung ist einfach im Aufbau und kann leicht und kostengünstig hergestellt werden. Sie kann entweder weitgehend vorgefertigt, z.B. bereits mit dem Dämmschichtbildner versehen, oder erst am Einsatzort hergestellt werden. Darüber hinaus weist sie sehr gute Brandschutzeigenschaften auf. Die erfindungsgemäße brandgeschützte Kabeldurchführung kann bei neuen Wänden oder Decken vorgesehen oder nachträglich installiert werden. Sie kann auch als Schalungskörper zur späteren Belegung mit Kabeln eingebaut bzw. nachgerüstet werden. Die erfindungsgemäße brandgeschützte Kabeldurchführung ist besonders gut geeignet für die direkte Belegung mit Kabeln, d.h. die Belegung mit Kabeln, die nicht weiter, z.B. durch ein Rohr oder eine andere Umhüllung, geschützt sind.

Unter "Halbschalen" werden hier zwei Teile eines Hohlkörpers verstanden, die zusammengefügt den Hohlkörper ergeben. Beispielsweise kann es sich um im Querschnitt halbkreisförmige Teile handeln, die mit den offenen Seiten zusammengelegt einen rohrförmigen Hohlkörper bilden. Die Teile können dabei gleiche Abmessungen aufweisen, beispielsweise drehsymmetrisch oder spiegelsymmetrisch sein. Sie können aber auch verschiedene Abmessungen aufweisen, z.B. zwei Teile, die beide im Querschnitt kreisringabschnittförmig ausgebildet sind, dabei jedoch unterschiedliche Anteile des Kreisrings repräsentieren. Eine "Halbschale" im Sinne der vorliegenden Erfindung kann auch die Form einer ebenen Abdeckung eines die zweite Halbschale bildenden offenen Profils, z.B. eines im Querschnitt im Wesentlichen U-förmigen Profils, haben. Der durch die Halbschalen gebildete Hohlkörper kann im Querschnitt im Wesentlichen kreisförmig, oval oder eckig, z.B. dreieckig, quadratisch, rechteckig oder sonstwie vieleckig sein. Auch unregelmäßige Formen des Hohlkörpers sind selbstverständlich möglich.

Unter einem "Dämmschichtbildner" wird hier ein Material verstanden, das bei Raumtemperatur ein vergleichsweise geringes Volumen aufweist und unter Hitzeeinwirkung, vorzugsweise bei 150 °C bis 200 °C, eine deutliche Volumenzunahme erfährt, vorzugsweise unter Erzeugung eines erheblichen Blähdrucks von z.B. 1-2 N/mm². In der Regel wird bei einem solchen Material unter Wärmeeinwirkung ein Flammschutzmittel zu einem Schaum aufgebläht, bis sich eine stark wärmedämmende, thermisch weitgehend stabile Schaumschicht bildet, die die dahinter liegenden bzw. davon umschlossenen Materialien schützt.

Im Falle eines Brandes schäumt der auf der Innenseite von mindestens einer Halbschale, vorzugsweise jedoch auf den Innenseiten beider Halbschalen, aufgebrachte Dämmschichtbildner bei Überschreiten einer bestimmten Temperatur, z.B. 150 °C, auf, wodurch der Hohlkörper von dem gebildeten Schaum vorzugsweise zumindest in einem Teilbereich über den gesamten Querschnitt verschlossen wird. Der Dämmschichtbildner erzeugt bevorzugt einen Blähdruck von 1-2 N/mm², besonders bevorzugt 1-1,7 N/mm². Der Schaumfaktor beträgt vorzugsweise 10-30, weiter bevorzugt 15-30 und besonders bevorzugt 15-26,5.

Unter einem "Steck- und/oder Klemmverbinder" wird hier ein Verbindungsmittel verstanden, das eine Verbindung der Halbschalen dadurch herstellt, dass diese in das Verbindungsmittel eingesteckt und/oder von diesem eingeklemmt werden. Die Verbindung wird so durch Form- und/oder Kraftschluss hergestellt, ohne dass eine Schraub- oder Nietverbindung vorhanden ist. Gegebenenfalls kann die Verbindung durch Vorsehen von Schnapp- oder Rastelementen noch modifiziert werden.

Durch die Steck- und/oder Klemmverbinder ist eine besonders einfache Montage der brandgeschützten Kabeldurchführung möglich. Die Halbschalen brauchen lediglich zusammengesteckt oder ineinander geschoben werden, um den Hohlkörper zu bilden, der die Kabel aufnehmen kann. Die Kabel können auch zunächst einfach nur in die erste Halbschale eingelegt werden. Anschließend kann dann die zweite Halbschale mit Hilfe der Steck- und/oder Klemmverbinder an der ersten Halbschale angebracht werden, um die Kabel einzufassen. Dies ist auch bei bereits verlegten Kabeln leicht möglich, so dass die erfindungsgemäße brandgeschützte Kabeldurchführung sich besonders gut dafür eignet, bereits vorhandene Kabelinstallationen nachträglich mit einem Brandschutz auszustatten.

Die Steck- und/oder Klemmverbinder können ein von den Halbschalen getrenntes Element bilden, oder auch mit einer der Halbschalen fest verbunden, beispielsweise an diese angeformt oder angeklebt sein.

In einer bevorzugten Ausführungsform der brandgeschützten Kabeldurchführung bestehen die Halbschalen aus Kunststoff. Bevorzugt bestehen dabei auch die Steck- und/oder Klemmverbinder aus Kunststoff. Bei dem Kunststoff handelt es sich vorzugsweise um Polyvinylchlorid (PVC), Polyethylen (PE) oder Polypropylen (PP). Auf diese Weise ist eine besonders leichte und kostengünstige brandgeschützte Kabeldurchführung herstellbar, deren Wandung die Brandraumtemperaturen nur unwesentlich weiterleitet.

Bei der erfindungsgemäßen brandgeschützten Kabeldurchführung ist es bevorzugt, dass der Hohlkörper einen runden, ovalen oder polygonalen Querschnitt, vorzugsweise einen kreisförmigen, rechteckigen oder quadratischen Querschnitt aufweist. Besonders bevorzugt sind runde bzw. kreisförmige, rechteckige oder quadratische Querschnitte. Für den Fachmann ist jedoch ersichtlich, dass der Hohlkörper einen beliebigen Querschnitt, beispielsweise auch einen unregelmäßigen, aufweisen kann.

In einer Ausführungsform der brandgeschützten Kabeldurchführung handelt es sich bei den Steck- und/oder Klemmverbindern um im Wesentlichen H-förmige Kunststoffprofile. Diese Art der Steck- und/oder Klemmverbinder ist besonders gut für rohrförmige oder kastenförmige Hohlkörper geeignet, und ermöglicht auf besonders einfache Weise das Verbinden der Halbschalen, indem diese mit den jeweiligen Bereichen zwischen die Schenkel des H eingesteckt und/oder eingeklemmt werden. Um eine Klemmwirkung zu erzielen oder zu erhöhen, können die Schenkel jeweils vom Querbalken weg leicht nach innen zueinander gerichtet sein.

Vorzugsweise sind die Halbschalen lösbar miteinander verbunden. Dies erleichtert die Revision der erfindungsgemäßen brandgeschützten Kabeldurchführung. Es ist aber auch beispielsweise möglich, die Halbschalen durch eine Klebverbindung zu verbinden.

Bei der erfindungsgemäßen brandgeschützten Kabeldurchführung sind die offenen Enden des Hohlkörpers mit Kappen und/oder entsprechenden Schaumstoffzuschnitten, verschlossen. Sofern die brandgeschützte Kabeldurchführung mit z.B. Kabeln belegt ist, sind für die Kabel in den Kappen und/oder Schaumstoffzuschnitten entsprechende Aussparungen vorgesehen, durch die die Kabel geführt werden können. Die Aussparungen können bereits vorgefertigt sein oder bei Bedarf bauseitig hergestellt werden. Für den Fall, dass die erfindungsgemäße brandgeschützte Kabeldurchführung für eine etwaige spätere Belegung leer gelassen wird, ist es auch aus Schallschutzgründen bevorzugt, dass vorzugsweise zentral im Inneren des Hohlkörpers über dessen gesamten Querschnitt eine Mineralfaserisolierung vorgesehen ist. Es hat sich herausgestellt, dass es regelmäßig ausreicht, zentral eine Isolierung vorzusehen. Alternativ oder gegebenenfalls auch zusätzlich können jedoch zu den Kappen und/oder Schaumstoffzuschnitten hin entsprechende Mineralfaserisolierungen vorgesehen sein. Die Kappen bzw. Schaumstoffzuschnitte sind darüber hinaus ebenfalls mit einem Dämmschichtbildner beschichtet bzw. imprägniert. Dabei kann es sich um denselben Dämmschichtbildner handeln, der auch für die Halbschale(n) verwendet wurde, oder um einen anderen Dämmschichtbildner. Die Kappen und/oder Schaumstoffzuschnitte können auch mit einer rauchdichten Schicht aus Silikon oder Polyacrylat versehen sein. Der Fachmann wird diese Maßnahmen, entweder allein oder in Kombination, in Abhängigkeit von der zu erzielenden Feuerwiderstandsdauer vorsehen.

In einer weiteren bevorzugten Ausführungsform der Erfindung ist der Hohlkörper außen mit einer Ummantelung aus mit Dämmschichtbildner beschichtetem Gewebe versehen. Es kann sich hierbei beispielsweise um eine Bandage handeln, wie sie in der DE 20 2006 012 624 beschrieben ist.

Die Erfindung betrifft auch eine Anordnung, die aus einer erfindungsgemäßen brandgeschützten Kabeldurchführung und mindestens einem in die erfindungsgemäße brandgeschützte Kabeldurchführung eingelegten oder durch die brandgeschützte Kabeldurchführung durchgeführten Kabel besteht. Die Kabel sind bei der erfindungsgemäßen Anordnung demnach nicht zusätzlich, z.B. durch ein separates Rohr oder eine Manschette geschützt, sondern nur durch die brandgeschützte Kabeldurchführung. Vorzugsweise ist dabei der Hohlraum der brandgeschützten Kabeldurchführung mit einem oder mehreren Kabeln im Wesentlichen vollständig ausgefüllt. Im Wesentlichen ausgefüllt heißt hier, dass die Innenwände der brandgeschützten Kabeldurchführung den Kabelmantel bzw. die Kabelmäntel im Wesentlichen über den gesamten Querschnitt der brandgeschützten Kabeldurchführung berühren, und die brandgeschützte Kabeldurchführung, ungeachtet unvermeidbar entstehender Zwischenräume zwischen den Kabeln, vollständig mit Kabeln gefüllt ist und mit keinem gleichartigen Kabel mehr belegt werden kann.

Die Erfindung betrifft auch eine Anordnung, umfassend eine erfindungsgemäße brandgeschützte Kabeldurchführung oder eine Anordnung wie oben beschrieben, d.h. eine Anordnung, bestehend aus einer erfindungsgemäßen brandgeschützten Kabeldurchführung und mindestens einem in die erfindungsgemäße brandgeschützte Kabeldurchführung eingelegten oder durch die brandgeschützte Kabeldurchführung durchgeführten Kabel, und eine Wand oder Decke. Es kann sich dabei beispielsweise um eine Gebäudedecke, z.B. aus Beton oder einem anderen Material, aber auch z.B. um eine Schiffswand oder -decke oder dergleichen handeln, die z.B. aus Metall oder einem Kompositmaterial sein kann.

Die Erfindung wird im Folgenden anhand von Figuren und bevorzugten Ausführungsformen beispielhaft näher erläutert. Es zeigt
Figur 1 eine in einer Wand installierte Ausführungsform der erfindungsgemäßen brandgeschützten Kabeldurchführung,
Figur 2 eine in einer Wand installierte Ausführungsform der erfindungsgemäßen brandgeschützten Kabeldurchführung, die fluchtend mit den Wandoberflächen abschließt,
Figur 3 eine einseitig in einen angrenzenden Raum hineinragende Ausführungsform der erfindungsgemäßen brandgeschützten Kabeldurchführung,
Figur 4 eine Ausführungsform der erfindungsgemäßen brandgeschützten Kabeldurchführung mit Schaumstoffzuschnitten an Stelle von Kappen an den Stirnseiten.
Figur 5 eine unbelegte Ausführungsform der erfindungsgemäßen brandgeschützten Kabeldurchführung,
Figur 6 eine unbelegte Ausführungsform der erfindungsgemäßen brandgeschützten Kabeldurchführung, die außen eine Ummantelung aufweist,
Figur 7 einen Querschnitt durch eine Ausführungsform der erfindungsgemäßen brandgeschützten Kabeldurchführung, und
Figur 8 einen Querschnitt durch eine weitere Ausführungsform der erfindungsgemäßen brandgeschützten Kabeldurchführung.

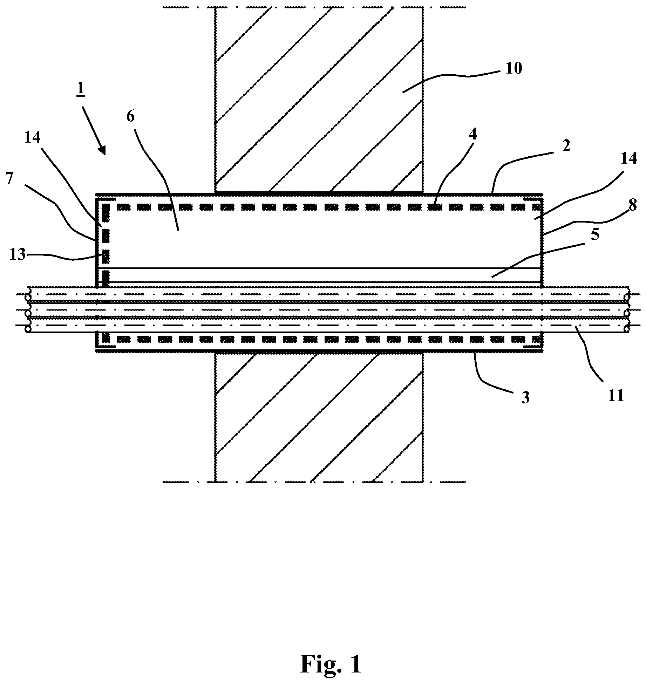

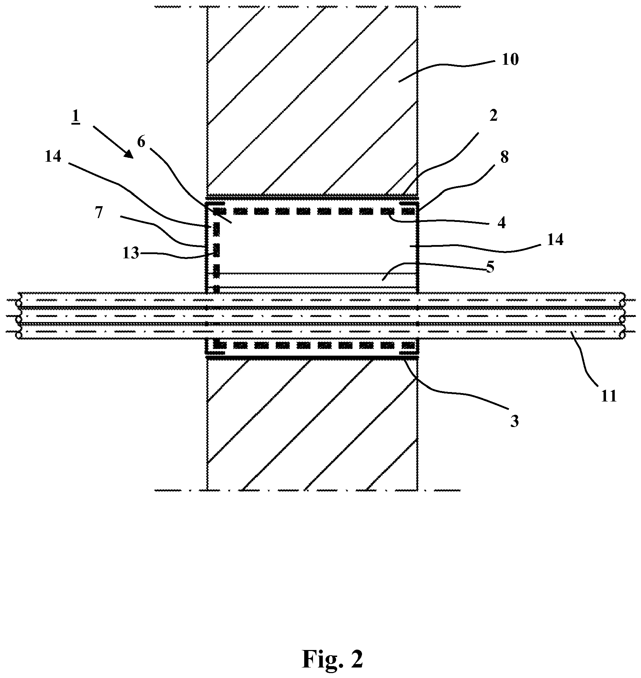

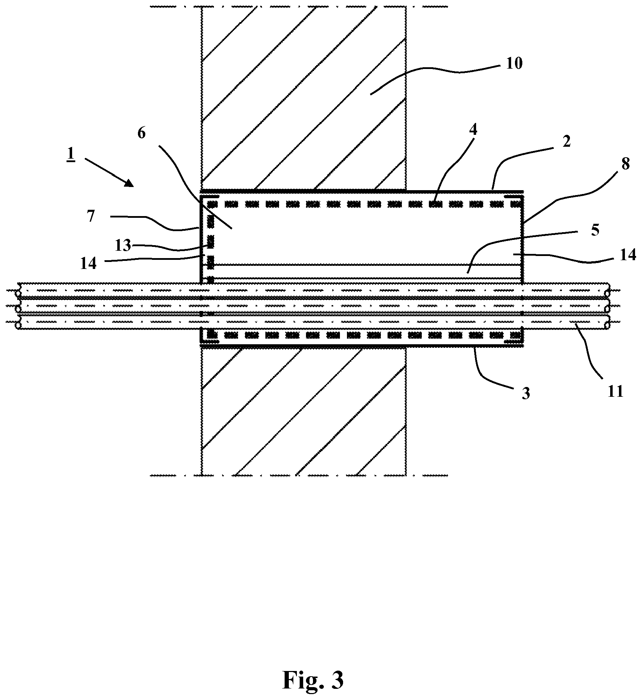

Figur 1 zeigt einen Längsschnitt durch eine Ausführungsform der erfindungsgemäßen brandgeschützten Kabeldurchführung 1, die mit Kabeln 11 teilweise belegt ist. Die brandgeschützte Kabeldurchführung 1 ist hier in einer Wand 10 installiert, kann jedoch ebenso gut auch in einer Decke oder dergleichen montiert werden. Die brandgeschützte Kabeldurchführung 1 umfasst hier zwei Rohrhalbschalen 2, 3 aus Kunststoff. Die Rohrhalbschalen 2, 3 sind durch Steck-/Klemmverbinder 5, die als H-Profile ausgebildet sind, miteinander verbunden, so dass ein rohrförmiger Hohlkörper 6 gebildet ist. Die Halbschalen 2, 3 sind dabei einfach mit den Enden ihrer offenen Längsseiten in die Schenkel des H-Profils eingesteckt bzw. eingeschoben. Eine Schraub- oder Nietverbindung ist nicht erforderlich. Die Halbschalen 2, 3 sind innenseitig mit einem Dämmschichtbildner 4 direkt beschichtet, d.h. der Dämmschichtbildner 4 ist unmittelbar auf den Innenseiten der Halbschalen 2, 3 aufgebracht. Die Schicht aus dem Dämmschichtbildner 4 bedeckt hier die jeweiligen Innenseiten beider Halbschalen 2, 3 nahezu vollständig. Es ist aber auch möglich, nur eine der Halbschalen 2, 3 zu beschichten oder die Schicht aus dem Dämmschichtbildner 4 diskontinuierlich auszugestalten oder nur in einem Teilbereich einer der Halbschalen 2, 3 vorzusehen. Die offenen Stirnseiten 14 des durch die Halbschalen 2, 3 gebildeten Hohlkörpers 6 sind mit Kappen 7, 8 verschlossen. Die Kappen 7, 8 weisen Öffnungen oder Ausnehmungen auf, um die Kabel 11 hindurchführen zu können. Eine der Kappen 7, 8, hier die in der Figur links dargestellte Kappe 7, ist ebenfalls mit einem Dämmschichtbildner 13 beschichtet, die rechte Kappe 8 nicht. Bei voller oder nahezu voller Belegung der brandgeschützten Kabeldurchführung 1 kann auf die Verwendung der Kappen auch ganz verzichtet werden. Die in Figur 1 dargestellte brandgeschützte Kabeldurchführung 1 ragt beidseitig der Wand 10 in die angrenzenden Räume hinein. Es ist aber ohne Weiteres auch möglich, die brandgeschützte Kabeldurchführung 1 fluchtend mit den Wandoberflächen oder einer der Wandoberflächen auszugestalten, wie dies in den Figuren 2 und 3 dargestellt ist.

Im Brandfall schäumt der Dämmschichtbildner 4, 13 bei Überschreiten einer Mindesttemperatur stark auf und verschließt die Kabeldurchführung 1, so dass ein Durchschlagen von Rauch und/oder Feuer verhindert oder zumindest verzögert wird.

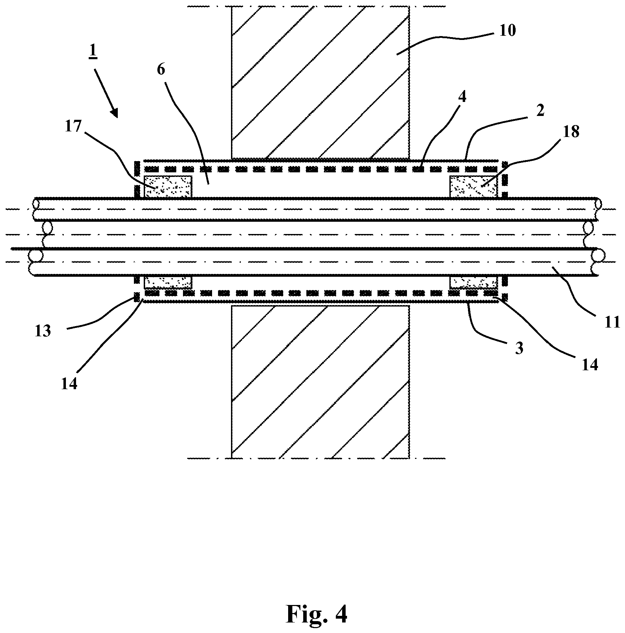

Figur 4 zeigt eine Ausführungsform der erfindungsgemäßen brandgeschützten Kabeldurchführung 1, bei der die Stirnseiten 14 des durch die Halbschalen 2, 3 gebildeten Hohlkörpers 6 nicht mit Kappen 7, 8, sondern mit Schaumstoffzuschnitten 17, 18 verschlossen sind. Die Schaumstoffzuschnitte 17, 18 sind mit Öffnungen bzw. Ausnehmungen zur Durchführung von Kabeln 11 versehen. Die erfindungsgemäße brandgeschützte Kabeldurchführung 1 ist stirnseitig mit Dämmschichtbildner 13 versehen, wobei hier die Schaumstoffzuschnitte 17, 18 auf ihren Außenseiten, d.h. auf den zu den angrenzenden Räumen weisenden Flächen, sowie der stirnseitige Randbereich der Kabeldurchführung 1 mit Dämmschichtbildner 13 beschichtet sind. Auch hier kann bei voller oder nahezu voller Belegung auf die Schaumstoffzuschnitte 17, 18 auch verzichtet werden.

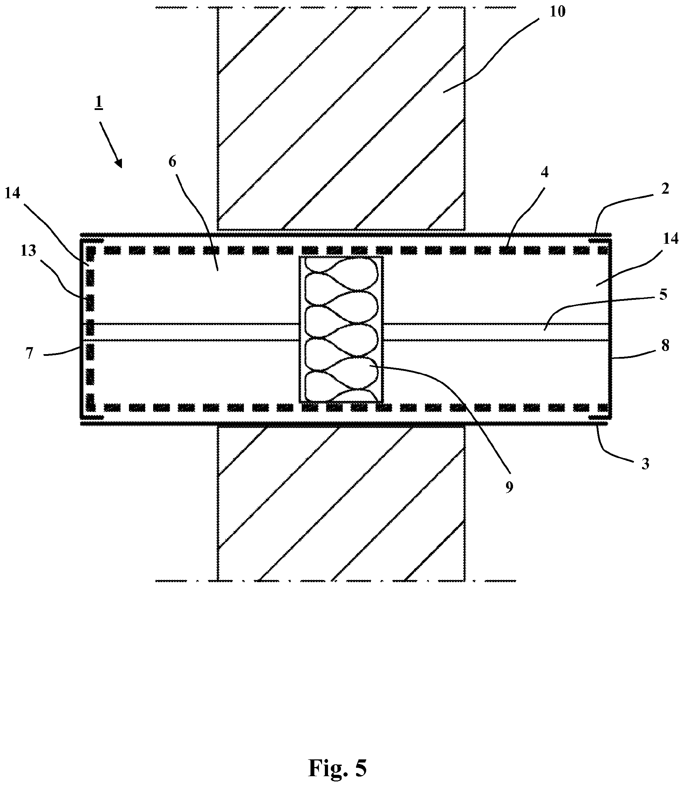

Figur 5 zeigt eine Ausführungsform der erfindungsgemäßen brandgeschützten Kabeldurchführung 1, die vorwiegend bei Leerbelegung eingesetzt wird. Diese Ausführungsform kann später mit Kabeln oder dergleichen belegt werden. Gleiche Bezugsziffern bezeichnen hier gleiche Komponenten wie in den Figuren 1-4, so dass auf eine erneute detaillierte Beschreibung hier verzichtet wird. Hier ist innerhalb des Hohlkörpers 6 zentral, d.h. von den jeweiligen zu den benachbarten Räumen gerichteten Enden des Hohlkörpers 6 etwa gleich weit beabstandet, eine Mineralfaserisolierung 9 vorgesehen. Sofern eine längere Feuerwiderstandszeit gewünscht oder erforderlich ist, können weitere Mineralfaserisolierungen 9 an, in oder in der Nähe der Kappen 7, 8 bzw. von Schaumstoffzuschnitten 17, 18, die an Stelle von oder auch zusätzlich zu Kappen 7, 8 vorhanden sein können, vorgesehen sein. Diese Mineralfaserisolierungen 9 können gegebenenfalls auch in die Innenseiten der Kappen 7, 8 eingeklebt sein. Es ist selbstverständlich auch alternativ möglich, Mineralfaserisolierungen 9 nur an, in oder in der Nähe der Kappen 7, 8 vorzusehen. Die Kappen 7, 8 können, wie hier für die Kappe 8 dargestellt, auf ihren Innenseiten auch mit einem Dämmschichtbildner 13 beschichtet sein.

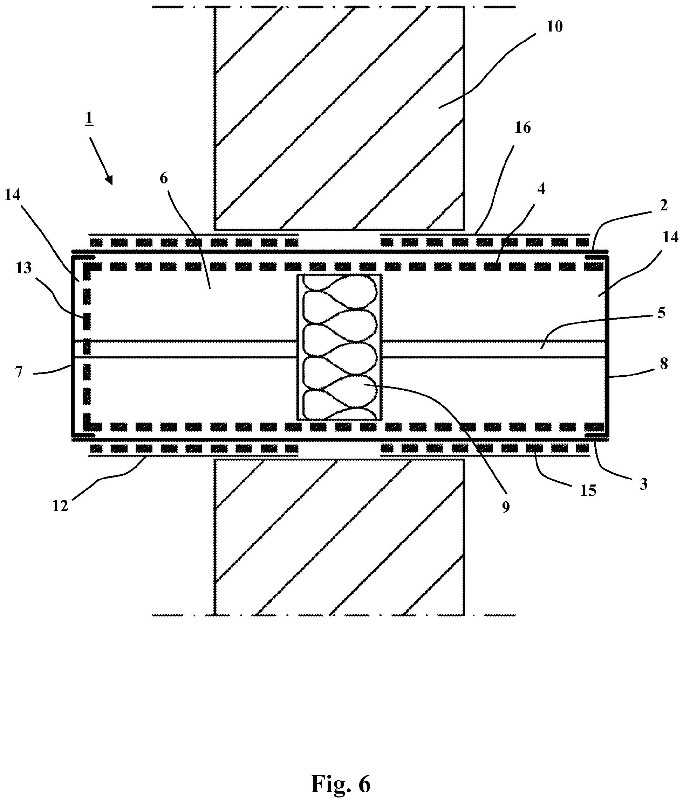

Figur 6 zeigt die in Figur 5 dargestellte Ausführungsform der erfindungsgemäßen brandgeschützten Kabeldurchführung 1, wobei der Hohlkörper 6 jedoch zusätzlich mit einer äußeren Ummantelung 12 aus einem mit einem Dämmschichtbildner 15 beschichteten Gewebe 16 versehen ist. Dies ist beispielsweise vorteilhaft, um eine bessere Abdichtung gegenüber den Rändern des Wand- oder Deckendurchbruchs zu erzielen. Darüber hinaus ergibt sich dadurch auch ein äußerer Schutz für die brandgeschützte Kabeldurchführung 1. Es können ein oder mehrere solche Ummantelungen bzw. Bandagen 12 vorgesehen sein. Auch mehrere Schichten bzw. Wicklungen einer Ummantelung 12 sind selbstverständlich möglich.

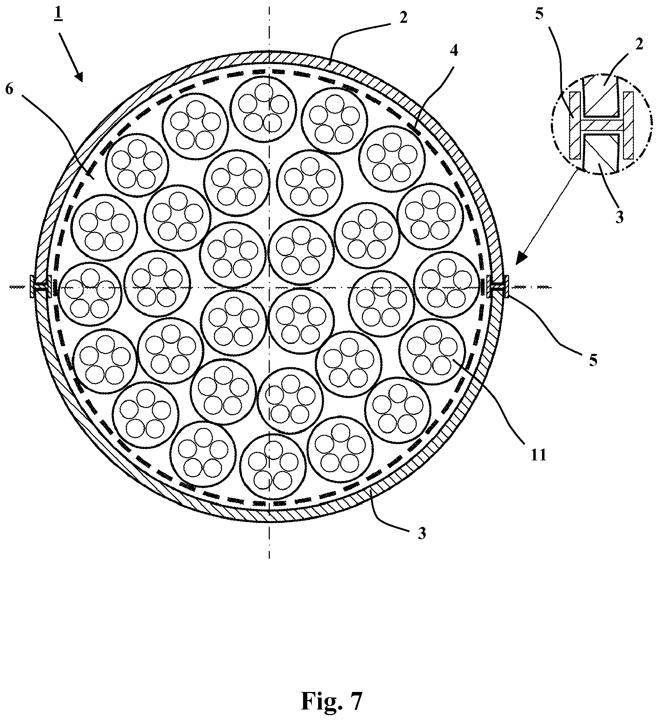

Figur 7 zeigt einen Querschnitt durch eine rohrförmige erfindungsgemäße brandgeschützte Kabeldurchführung 1 bei voller Belegung mit Kabeln 11. Oben rechts ist ein vergrößerter Ausschnitt aus dem Bereich der Verbindungsstelle zwischen den Halbschalen 2, 3 dargestellt. Der von den Rohrhalbschalen 2, 3 gebildete Hohlkörper 6 umschließt die Kabel 11 und bildet auf diese Weise den Kabelkanal, durch den die Kabel durch eine Wand 10 oder Decke durchgeführt werden können, wie oben beschrieben. Die Kabel 11 füllen hier den Hohlraum 6 im Wesentlichen vollständig aus. Der auf den Innenseiten, d.h. den zu den Kabeln gerichteten Seiten der Halbschalen 2, 3 aufgebrachte Dämmschichtbildner 4 ist hier über den gesamten Querschnitt vorgesehen. Im Brandfall dringt der entstehende Schaum des Dämmschichtbildners 4 auch in die Zwischenräume zwischen den Kabeln, so dass eine entsprechende Abschottung resultiert. Die aus Kunststoff bestehenden Halbschalen 2, 3 sind mit den seitlichen Rändern lediglich jeweils in ein beidseitig vorgesehenes im Querschnitt H-förmiges Kunststoffprofil 5 eingesteckt, wobei die obere Halbschale 2 in die oberhalb vom Quersteg des "H" abgehenden Schenkel eingesteckt ist, und die untere Halbschale 3 in die unterhalb des Querstegs abgehenden Schenkel eingesteckt ist. Das H-Profil 5 ist hier ein separates schienenartiges Profil. Es kann aber auch bereist einseitig an einem der Halbschalen 2, 3 vormontiert, beispielsweise angeformt oder angeklebt sein. Die Halbschalen können, müssen jedoch nicht, mit dem H-Profil verklebt sein.

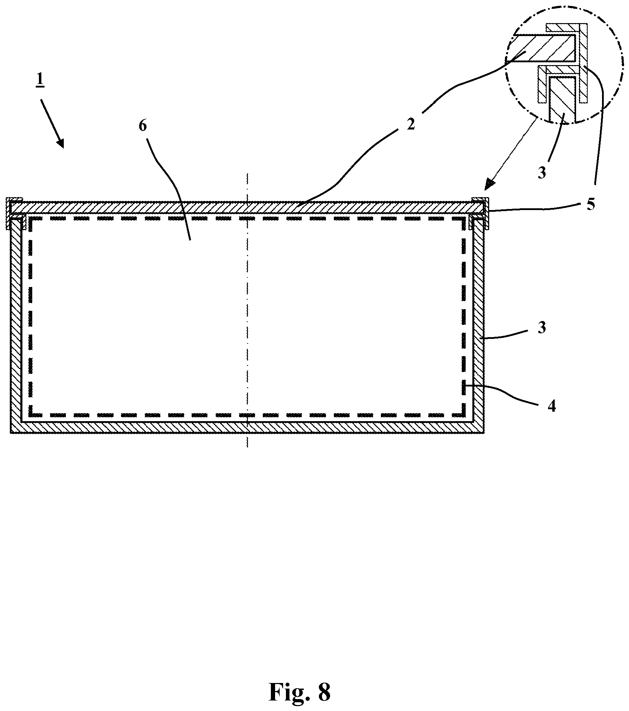

Figur 8 zeigt einen Querschnitt durch eine Ausführungsform der erfindungsgemäßen brandgeschützten Kabeldurchführung 1, die einen rechteckigen Querschnitt aufweist. Auch hier ist oben rechts ein vergrößerter Ausschnitt aus dem Bereich der Verbindungsstelle zwischen den Halbschalen 2, 3 dargestellt. Die untere Halbschale 3 ist hier im Wesentlichen U-förmig ausgebildet, die obere Halbschale 2 ist im Wesentlichen eben und bildet eine Art Deckel für die untere Halbschale 3. Die Steck-/Klemmverbinder 5 haben bei dieser Ausführungsform im Querschnitt die Form zweier aufeinander stehender im Wesentlichen rechter Winkel, wobei der eine Winkel mit einem Schenkel auf dem Schenkel des anderen Winkels so angeordnet ist, dass zwei rechtwinklig zueinander stehende im Wesentlichen U-förmige Ausnehmungen gebildet sind, in die die Halbschalen 2, 3 jeweils mit einer ihrer seitlichen Enden eingeführt werden können.

### Bezugszeichenliste:

- 1: Brandgeschützte Kabeldurchführung
- 2: Halbschale
- 3: Halbschale
- 4: Dämmschichtbildner
- 5: Steck-/Klemmverbinder
- 6: Hohlkörper
- 7: Kappe
- 8: Kappe
- 9: Mineralfaserisolierung
- 10: Wand
- 11: Kabel
- 12: Ummantelung
- 13: Dämmschichtbildner
- 14: Stirnseite
- 15: Dämmschichtbildner
- 16: Gewebe
- 17: Schaumstoffzuschnitt
- 18: Schaumstoffzuschnitt

## Patentansprüche

1. Brandgeschützte Kabeldurchführung, umfassend einander mit den offenen Seiten zugewandte Halbschalen (2, 3), wobei a) mindestens eine der Halbschalen (2, 3) auf ihrer Innenseite zumindest teilweise mit einem Dämmschichtbildner (4) beschichtet ist, b) die Halbschalen (2, 3) durch Steck- und/oder Klemmverbinder (5) unter Ausbildung eines Kabel (11) umschließenden Hohlkörpers (6) miteinander verbunden sind, c) offene Stirnseiten (14) des Hohlkörpers (6) mit Kappen (7, 8) und/oder Schaumstoffzuschnitten (17, 18) verschlossen sind und/oder zentral im Inneren des Hohlkörpers (6) über dessen gesamten Querschnitt eine Mineralfaserisolierung (9) vorgesehen ist und d) die Kappen (7, 8) innenseitig mit einem Dämmschichtbildner (13) beschichtet und/oder die Schaumstoffzuschnitte (17, 18) mit einem Dämmschichtbildner (13) beschichtet oder imprägniert sind.

2. Brandgeschützte Kabeldurchführung nach Anspruch 1, **dadurch gekennzeichnet, dass** die Halbschalen (2, 3) und/oder die Steck- und/oder Klemmverbinder (5) aus Kunststoff, vorzugsweise PVC, PE oder PP, bestehen.

3. Brandgeschützte Kabeldurchführung nach Anspruch 1 oder 2, **dadurch gekennzeichnet, dass** der Hohlkörper (6) einen runden, ovalen oder polygonalen Querschnitt, vorzugsweise einen kreisförmigen, rechteckigen oder quadratischen Querschnitt aufweist.

4. Brandgeschützte Kabeldurchführung nach einem der vorhergehenden Ansprüche, **dadurch gekennzeichnet, dass** es sich bei den Steck- und/oder Klemmverbindern (5) um im Wesentlichen H-förmige Kunststoffprofile handelt.

5. Brandgeschützte Kabeldurchführung nach einem der vorhergehenden Ansprüche, **dadurch gekennzeichnet, dass** die Halbschalen (2, 3) lösbar miteinander verbunden sind.

6. Brandgeschützte Kabeldurchführung nach einem der vorhergehenden Ansprüche, **dadurch gekennzeichnet, dass** der Hohlkörper (6) außen mit einer Ummantelung (12) aus mit Dämmschichtbildner (15) beschichtetem Gewebe versehen ist.

7. Brandgeschützte Kabeldurchführung nach einem der vorhergehenden Ansprüche, **dadurch gekennzeichnet, dass** zu den Kappen (7, 8) oder Schaumstoffzuschnitten (17, 18) hin Mineralfaserisolierungen (9) vorgesehen sind.

8. Anordnung, bestehend aus einer brandgeschützten Kabeldurchführung (1) nach einem der Ansprüche 1 bis 7 und mindestens einem in die brandgeschützte Kabeldurchführung (1) eingelegten oder durch die brandgeschützte Kabeldurchführung (1) durchgeführten Kabel (11).

9. Anordnung nach Anspruch 8, **dadurch gekennzeichnet, dass** der Hohlraum (6) der brandgeschützte Kabeldurchführung (1) mit einem oder mehreren Kabeln (11) im Wesentlichen vollständig ausgefüllt ist.

10. Anordnung, umfassend eine brandgeschützte Kabeldurchführung (1) nach einem der Ansprüche 1 bis 7 oder eine Anordnung nach einem der Ansprüche 8 oder 9 und eine Wand (10) oder Decke.

## Claims

1. A flame-resistant cable feedthrough comprising half-shells (2, 3) that face one another with their open sides, wherein a) at least one of the half-shells (2, 3) is at least partially coated with an intumescent material (4) on its inner side, b) the half-shells (2, 3) are connected to one another by means of plug-type and/or clamping connectors (5) such that a hollow body (6) enclosing the cable (11) is formed, c) open end faces (14) of the hollow body (6) are closed with caps (7, 8) and/or pre-cut cellular material sections (17, 18) and/or mineral fiber insulation (9) is centrally provided in the interior of the hollow body (6) over its entire cross section and d) the caps (7, 8) are coated with an intumescent material (13) on their inner side and/or the pre-cut cellular material sections (17, 18) are coated or impregnated with an intumescent material (13).

2. The flame-resistant cable feedthrough according to claim 1, **characterized in that** the halfshells (2, 3) and/or the plug-type and/or clamping connectors (5) consist of plastic, preferably of PVC, PE or PP.

3. The flame-resistant cable feedthrough according to claim 1 or 2, **characterized in that** the hollow body (6) has a round, oval or polygonal cross section, preferably a circular, rectangular or square cross section.

4. The flame-resistant cable feedthrough according to one of the preceding claims, **characterized in that** the plug-type and/or clamping connectors (5) consist of essentially H-shaped plastic profiles.

5. The flame-resistant cable feedthrough according to one of the preceding claims, **characterized in that** the half-shells (2, 3) are separably connected to one another.

6. The flame-resistant cable feedthrough according to one of the preceding claims, **characterized in that** the hollow body (6) is provided with an external casing (12) consisting of a woven fabric that is coated with an intumescent material (15).

7. The flame-resistant cable feedthrough according to one of the preceding claims, **characterized in that** mineral fiber insulations (9) are provided toward the caps (7, 8) or pre-cut cellular material sections (17, 18).

8. An arrangement consisting of a flame-resistant cable feedthrough (1) according to one of claims 1-7 and at least one cable (11) that is inserted into the flame-resistant cable feedthrough (1) or extends through the flame-resistant cable feedthrough (1).

9. The arrangement according to claim 8, **characterized in that** the hollow space (6) of the flame-resistant cable feedthrough (1) essentially is completely filled with one or more cables (11).

10. An arrangement comprising a flame-resistant cable feedthrough (1) according to one of claims 1-7 or an arrangement according to claim 8 or 9 and a wall (10) or ceiling.

## Revendications

1. Traversée de câble ignifugée, comprenant des demi-coques (2, 3) se faisant face par les côtés ouverts a) au moins l'une des demis-coques (2, 3) étant revêtue au moins en partie sur sa face intérieure d'un formateur de couche isolante (4), b) les demi-coques (2, 3) étant assemblées l'une à l'autre par un connecteur et/ou un raccord par serrage (5) en formant un corps creux (6) entourant des câbles (11), c) des faces frontales (14) ouvertes du corps creux (6) étant fermées par des calottes (7, 8) et/ou des coupons (17, 18) en mousse synthétique et/ou au centre, à l'intérieur du corps creux (6), sur l'ensemble de la section transversale de celui-ci, étant prévue une isolation minérale (9) et d) les calottes (7, 8) étant revêtues sur leur face intérieure d'un formateur de couche isolante (13) et/ou les coupons (17, 18) de mousse synthétique étant revêtus ou imprégnés d'un formateur de couche isolante (13).

2. Traversée de câble ignifugée selon la revendication 1, **caractérisée en ce que** les demi-coques (2, 3) et/ou les connecteurs et/ou raccords par serrage (5) sont en matière plastique, de préférence en PVC, en PE ou en PP.

3. Traversée de câble ignifugée selon la revendication 1 ou la revendication 2, **caractérisée en ce que** le corps creux (6) présente une section transversale ronde, ovale ou polygonale, de préférence une section transversale de forme circulaire, rectangulaire ou quadratique.

4. Traversée de câble ignifugée selon l'une quelconque des revendications précédentes, **caractérisée en ce que** pour les connecteurs et/ou raccords par serrage (5), il s'agit de profilés en matière plastique sensiblement en forme de H.

5. Traversée de câble ignifugée selon l'une quelconque des revendications précédentes, **caractérisée en ce que** les demi-coques (2, 3) sont assemblées l'une à l'autre de manière amovible.

6. Traversée de câble ignifugée selon l'une quelconque des revendications précédentes, **caractérisée en ce que** le corps creux (6) est muni à l'extérieur d'une enveloppe (12) en un textile revêtu d'un formateur de couche isolante (15).

7. Traversée de câble ignifugée selon l'une quelconque des revendications précédentes, **caractérisée en ce qu'**en plus des calottes (7, 8) ou coupons (17, 18) de mousse synthétique, sont prévues des isolations (9) en fibres minérales.

8. Agencement, constitué d'une traversée de câble (1) ignifugée selon l'une quelconque des revendications 1 à 7 et d'au moins un câble (11) inséré dans la traversée de câble (1) ignifugée ou passé à travers la traversée de câble (1) ignifugée.

9. Agencement selon la revendication 8, **caractérisé en ce que** la cavité (6) de la traversée de câble (1) ignifugée est remplie de manière sensiblement complète d'un ou de plusieurs câbles (11).

10. Agencement comprenant une traversée de câble (1) ignifugée selon l'une quelconque des revendications 1 à 7 ou un agencement selon l'une quelconque des revendications 8 ou 9 et une paroi (10) ou un plafond.
